# EUROPEAN PATENT SPECIFICATION

(11) **EP 0 745 516 B1**
(45) Date of publication and mention of the grant of the patent: **28.06.2000**
(21) Application number: 96108228.6
(22) Date of filing: 23.05.1996
(51) Int. Cl.: B60R 19/38

(54) **A drop-down bumper for motor vehicles, in particular motor cars**
Ein schwenkbarer Stossfänger für Kraftfahrzeuge, insbesondere für Personenkraftwagen
Pare-choc s'abaissant pour véhicules à moteur, en particulier pour automobiles

(30) Priority: 31.05.1995 IT TO950447
(43) Date of publication of application: 04.12.1996
(73) Proprietor: FIAT AUTO S.p.A., 10135 Torino (IT)
(72) Inventor: Di Giusto, Nevio, 10124 Torino (IT)
(74) Representative: Serra, Francesco

(56) References cited:
- DE-A- 3 642 245
- GB-A- 987 996
- GB-A- 2 141 978
- GB-A- 2 276 592
- US-A- 3 533 654
- US-A- 4 437 696
- REVUE AUTOMOBILE, vol. 85, no. 50, 6 December 1990, BERN,CH, page 5 XP000110542 "Fiat Tempra break, livrable en Suisse dès le mois de janvier"

## Description

The present invention concerns a drop-down bumper for motor vehicles, in particular motor cars.

In motor cars having a rear door or tailgate, typically two-compartment cars, or vans or motor cars having one or two rear doors, there has always been the problem of facilitating access to the load platform of the luggage compartment.

Three-part bumpers have already been suggested, where the central part which corresponds with the opening of the tailgate or rear doors can be lowered, while the two side parts are fixed to the body.

Lowering of the central piece is achieved by hinges on the lower region of this part of the bumper and this pivoting movement causes the face of the bumper facing away from the body to move to a position substantially perpendicular to it, that is to say the middle part of the bumper turns through an angle of approximately 90°.

Solutions such as those described above, although satisfactory in a practical sense (in fact accessibility to the load platform is improved), are less satisfactory aesthetically, as the bumper is clearly constructed from three distinct and separate pieces and this gives rise to difficulties in its assembly in terms of aligning the three separate constituent pieces of the bumper.

Documents US-A-3 533 654, GB-A-987 996, GB-A-2 276 592 and GB-A-2 141 987 show drop-down bumpers according to the pre-characterizing portion of claim 1.

The object of the present invention is to make a drop-down bumper for motor vehicles so as to facilitate access to the load platform, and which is made from a single piece, simply constructed and inexpensive.

The present invention achieves the aforesaid aim by means of a rear bumper for motor vehicles, in particular motor cars of the type including at least one rear door, the said bumper comprising a central part and two side parts integral with the said central part, the said side parts normally being firmly attached to the vehicle body, having the characteristics as set out specifically in the following claims.

Further characteristics and advantages of the present invention will become evident in the course of the following detailed description, given purely by way of non-limitative example with reference to the accompanying drawings, in which:
Figure 1 is a rear perspective view of the rear portion of a two-compartment motor car having a tailgate and a rear bumper according to the invention;
Figure 2 is a perspective view of the part of the car as in Figure 1, with the tailgate open and the bumper according to the invention in its raised position;
Figure 3 is a perspective view of the rear part of the motor car of Figure 2 shown partly transparent with the bumper according to the invention in the lowered position; and
Figure 4 is a perspective view of the bumper which is the subject of the present invention shown transparent and provided with a release device.

With reference to the Figures, the reference numeral 2 generally indicates the rear part of a motor car comprising a rear door or tailgate 4 and a rear bumper 6 according to the invention.

The bumper 6 is formed as a single piece, for example in plastics, and comprises a central part 8 and two side parts 10, 12.

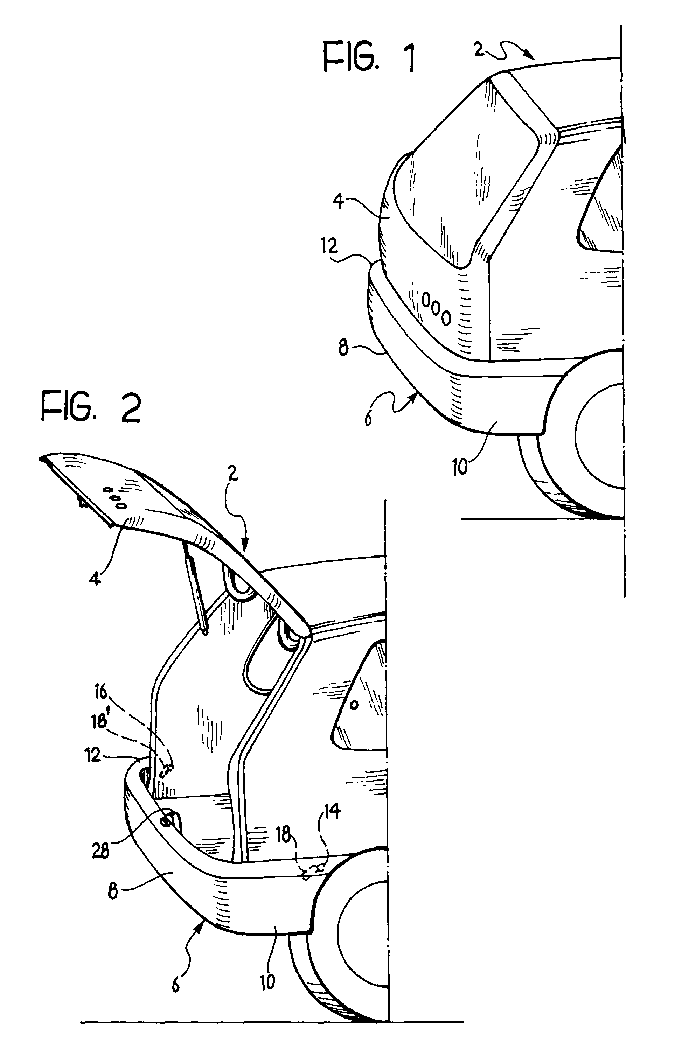

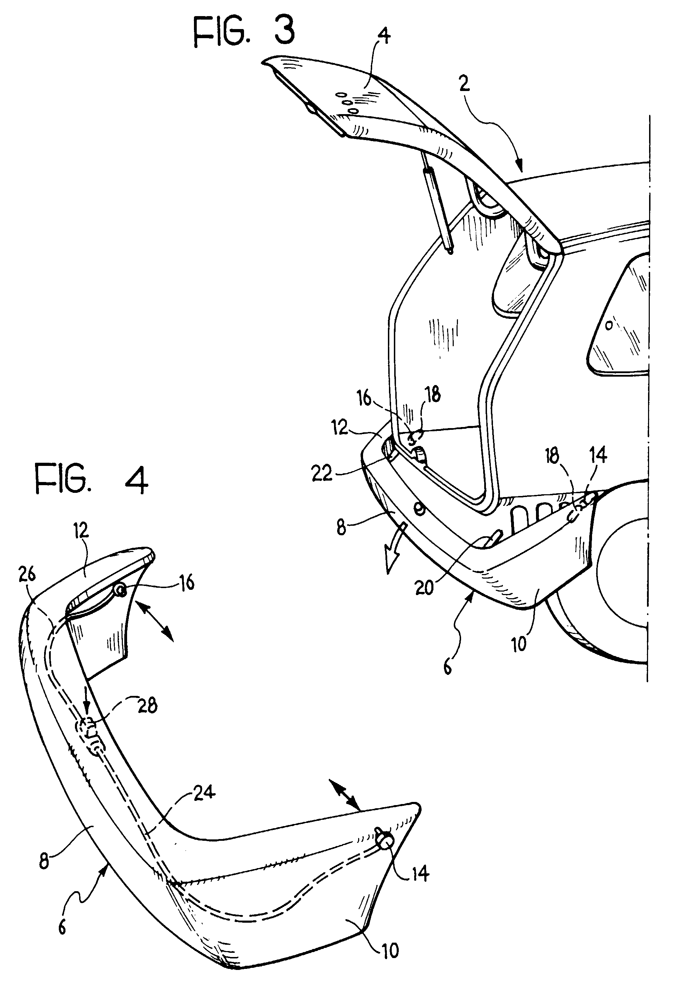

The bumper 6 is retained at the ends of the side parts 10, 12 by retractable pins 14, 16 (Figures 3 and 4) which are fixed to the body. Crescent-shape grooves, of which only one is shown in Figures 2 and 3, indicated with 18 (the other being indicated with 18') are formed in the internal walls of the side parts 10, 12 of the bumper 6 which face towards the motor car in correspondence with the retractable pins 14, 16. The ends of the crescent-shape grooves have depressions (not visible in the drawings) for accommodating the ends of the retractable pins 14, 16.

A pair of small links 20 and 22 (Figure 3) pivot the bumper 6 to the body.

The retractable pins 14, 16 are connected, for example by means of Bowden cables 24, 26 to a release button 28.

The bumper is lowered as follows. Upon lifting the tailgate 4, the user, if he wishes to lower the bumper 6 presses the release button 28 which, by means of the Bowden cables 24, 26, causes retraction of the retractable pins 14, 16 from the depressions in the grooves 18, 18'.

Then, upon moving the bumper 6 in the direction of the arrow in Figure 3, the pins 14, 16 move along the length of the grooves 18, 18', to the end of their path, taking the bumper 6 to the position illustrated in Figure 3.

The crank mechanism formed by the links 20, 22 retains the bumper 6 stably in its lowered position.

Once loading is complete, the user, by pulling the bumper 6 up in the opposite direction to that described above causes the pins 14,16 to travel back along the grooves 18, 18' so that they are re-engaged in the depressions at the ends of the grooves 18, 18' and the bumper therefore returns to the position illustrated in Figure 2.

Naturally the principle of the invention remaining the same, the embodiments and details of construction can be widely varied with respect to that which is described and illustrated without departing from the scope of the present invention as defined by the claims.

## Claims

1. A rear bumper for motor vehicles, in particular motor cars, of the type having at least one rear door or tailgate (4), the said bumper (6) comprising a central part (8) and two side parts (10, 12), the said side parts (10, 12) normally being stably fixed to the body, including means (14, 16; 18, 18'; 20, 22; 28) for displacing the said bumper (6) downwardly from and returning it to its normal position of use, characterised in that the said means (14, 16; 18, 18'; 20, 22; 28) for displacing the said bumper (6) include grooves (18, 18') on the interior of the side parts (10, 12) of the bumper (6), each groove (18, 18') slidingly cooperating with retractable pins (14, 16) fixed to the body of the motor car.

2. A bumper according to claim 1, characterised in that the said means (14, 16; 18, 18'; 20, 22; 28) for displacing the said bumper (6) further include a pair of connecting links (20, 22) pivotally connected to the vehicle body and to the bumper (6).

3. A bumper according to any of the preceding claims, characterised in that the said means (14, 16; 18, 18'; 20, 22; 28) for displacing the said bumper (6) include a device (28) operable to release the said bumper from its raised position, by allowing the said retractable pins (14, 16) to slide in the said grooves (18, 18').

4. A bumper according to any of the preceding claims, characterised in that the said device (28) is connected to the said retractable means (14, 16) by Bowden cables (24, 26).

## Patentansprüche

1. Hintere Stoßstange für Kraftfahrzeuge, im Besonderen Personenkraftwagen, die zumindest eine Hecktüre oder Heckklappe (4) besitzen, wobei die Stoßstange (6) einen Mittelteil (8) sowie zwei Seitenteile (10, 12) enthält, wobei die Seitenteile (10, 12) normalerweise an der Karosserie starr befestigt sind, wobei eine Vorrichtung (14, 16; 18, 18'; 20, 22; 28) vorgesehen ist, um die Stoßstange (6) aus ihrer normalen Betriebsstellung nach unten auszulenken und sie wieder in diese zurückzuführen, dadurch gekennzeichnet, dass die Vorrichtung (14, 16; 18, 18'; 20, 22; 28) für das Auslenken der Stoßstange (6) Rillen (18, 18') im Inneren der Seitenteile (10, 12) der Stoßstange (6) aufweist, wobei jede Rille (18, 18') gleitend mit rückziehbaren Zapfen (14, 16) zusammenwirkt, die an der Karosserie des Kraftfahrzeugs befestigt sind.

2. Stoßstange gemäß Anspruch 1, dadurch gekennzeichnet, dass die Vorrichtung (14, 16; 18, 18'; 20, 22; 28) für das Auslenken der Stoßstange (6) weiters ein Paar von Verbindungsgliedern (20, 22) aufweist, die mit der Fahrzeugkarosserie und der Stoßstange (6) schwenkbar verbunden sind.

3. Stoßstange gemäß irgendeinem der bisherigen Ansprüche, dadurch gekennzeichnet, dass die Vorrichtung (14, 16; 18, 18'; 20, 22; 28) für das Auslenken der Stoßstange (6) eine Einrichtung (28) aufweist, die in Betrieb gesetzt wird, um die Stoßstange aus ihrer angehobenen Stellung freizugeben, wodurch die rückziehbaren Zapfen (14, 16) in den Rillen (18, 18') gleiten können.

4. Stoßstange gemäß irgendeinem der bisherigen Ansprüche, dadurch gekennzeichnet, dass die Einrichtung (28) mit der rückziehbaren Einrichtung (14, 16) über Bowdenzüge (24, 26) verbunden ist.

## Revendications

1. Pare-chocs arrière pour véhicules à moteur, en particulier pour automobiles, du type ayant au moins une porte arrière ou un hayon (4), le pare-chocs (6) comprenant une partie centrale (8) et deux parties latérales (10, 12), les parties latérales (10, 12) étant normalement fixées de manière stable à la carrosserie, comprenant un dispositif (14, 16; 18, 18'; 20, 22; 28) destiné à déplacer le pare-chocs (6) vers le bas depuis sa position normale d'utilisation et à le ramener vers cette position, caractérisé en ce que ledit dispositif (14, 16; 18, 18'; 20, 22; 28) destiné à déplacer le pare-chocs (6) comporte des gorges (18, 18') placées à l'intérieur des parties latérales (10, 12) du pare-chocs (6), chaque gorge (18, 18') coopérant par glissement avec les broches rétractables (14, 16) fixées à la carrosserie du véhicule à moteur.

2. Pare-chocs selon la revendication 1, caractérisé en ce que ledit dispositif (14, 16; 18, 18'; 20, 22; 28) destiné à déplacer le pare-chocs (6) comporte en outre deux bielles de raccordement (20, 22) raccordées de manière pivotante à la carrosserie du véhicule et au pare-chocs (6).

3. Pare-chocs selon l'une quelconque des revendications précédentes, caractérisé en ce que ledit dispositif (14, 16; 18, 18'; 20, 22; 28) destiné à déplacer le pare-chocs (6) comporte un appareil (28) destiné à libérer le pare-chocs de sa position levée en permettant aux broches rétractables (14, 16) de glisser dans lesdites gorges (18, 18').

4. Pare-chocs selon l'une quelconque des revendications précédentes, caractérisé en ce que ledit appareil (28) est raccordé au dispositif rétractable (14, 16) par des câbles à gaine souple (24, 26).
